# EUROPÄISCHE PATENTSCHRIFT

(11) **EP 1 106 047 B1**
(45) Veröffentlichungstag und Bekanntmachung des Hinweises auf die Patenterteilung: **08.03.2006**
(21) Anmeldenummer: 00126359.9
(22) Anmeldetag: 02.12.2000
(51) Int. Cl.: A01D 45/02

(54) **Einzugs- und Pflückeinrichtung sowie Erntemaschine**
Corn gathering and picking device and harvesting machine
Dispositif d'introduction et de cueillage et machine de récolte

(30) Priorität: 09.12.1999 DE 19959338
(43) Veröffentlichungstag der Anmeldung: 13.06.2001
(73) Patentinhaber: Maschinenfabrik Kemper GmbH & Co. KG, 48703 Stadtlohn (DE)
(72) Erfinder: Wolters, Norbert, 48712 Gescher (DE); Wuebbels, Richard, 46414 Rhede (DE)
(74) Vertreter: Holst, Sönke

(56) Entgegenhaltungen:
- DE-A- 19 528 817
- DE-A- 19 734 747
- US-A- 4 594 842
- US-A- 4 926 623
- US-A- 5 651 243
- US-A- 5 722 225

## Beschreibung

Die Erfindung betrifft eine Einzugs- und Pflückeinrichtung mit einer rotierenden Einzugseinrichtung und einer Pflückeinrichtung, wobei die Einzugseinrichtung zum Erfassen von Teilen, insbesondere Stängeln, von Pflanzen eingerichtet ist, und betreibbar ist, die Pflanzen der Pflückeinrichtung zuzuführen, die Teile von ihnen abtrennt, und die Einzugseinrichtung wenigstens eine drehbare Förderscheibe und ein darüber angeordnetes, drehbares oberes Transportelement aufweist.

In der DE 197 34 747 A ist ein Maisernte-Vorsatzgerät zum Anbau an eine selbstfahrende Erntemaschine beschrieben, das reihenunabhängig mähen und die Maiskolben von den Pflanzen pflücken kann, um sie gesondert vom Rest der Pflanzen zu verarbeiten, beispielsweise auszudreschen. Das Gerät weist zum reihenunabhängigen Erfassen und Abmähen der Pflanzen ein Mähwerk mit übereinander rotierenden, am Außenumfang mit Aussparungen versehenen Förderscheiben und darunter einem Messer auf, wie es von Maisgebissen her bekannt ist. Die Pflanzen werden stromab des Mähwerks angebrachten konventionellen Pflückaggregaten zugeführt, wie sie in der DE 30 29 424 A beschrieben sind.

Als nachteilig ist dabei anzusehen, dass die mit Ausnehmungen versehenen Förderscheiben den Transport der Pflanzen nicht immer zuverlässig bewerkstelligen. Insbesondere geneigt stehende Pflanzen können nicht erfasst werden.

Die US 4 594 842 A zeigt ein reihenunabhängiges Maisgebiss mit übereinander angeordneten Förderscheiben und einem darunter angeordneten Kreismesser. Die Pflanzen werden durch die Förderscheiben als Ganzes in einen Feldhäcksler gefördert und dort gehäckselt. Ein Pflückvorgang, d. h. ein Abtrennen von Fruchtständen der Pflanzen, findet nicht statt.

Das der Erfindung zugrunde liegende Problem wird darin gesehen, eine verbesserte Erntegutbergungsvorrichtung bereitzustellen.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Es wird vorgeschlagen, die Einzugseinrichtung der Einzugs- und Pflückeinrichtung mit zwei übereinander angeordneten Transportelementen auszustatten, von denen das obere Transportelement eine in Drehrichtung vorlaufende Oberfläche mit abweisendem Förderverhalten aufweist. Unter einem abweisenden Förderverhalten ist hier zu verstehen, dass ein Teil - insbesondere Stängel - der Pflanze, das in den Wirkungsbereich des Transportelements gerät, nach außen abgelenkt, und nicht nach innen eingezogen wird. Dieses abweisende Förderverhalten kann beispielsweise durch eine entsprechende Krümmung von Fingern des oberen Einzugselements erreicht werden, die entgegen der Drehrichtung verläuft. Der Vorteil des abweisenden Förderverhaltens liegt darin, dass in Zusammenwirken mit einem unteren Transportelement in Form einer an sich bekannten Förderscheibe, und einem vorzugsweise ebenfalls aggressiven Förderverhalten der nachlaufenden Rückseite des oberen Transportelements eine Art Zwickel gebildet wird, in dem der Stängel der Pflanze - in leicht geneigter, aber im wesentlichen vertikaler Stellung - unproblematisch transportierbar ist.

Auf diese Weise erhält man ein wesentlich verbessertes Transportverhalten der Einzugseinrichtung. Eingezogene Pflanzen werden sicher festgehalten und transportiert.

Wie bereits angemerkt, ist es vorteilhaft, die in Drehrichtung nachlaufende Oberfläche des Transportelements mit einem aggressiven Förderverhalten auszustatten, d. h. derart zu formen, dass an der nachlaufenden Oberfläche in Anlage kommende Pflanzenteile nach innen eingezogen werden.

Ein derartiges Förderverhalten kann dadurch erzielt werden, dass das obere Transportelement eine Anzahl im wesentlichen radial nach außen stehender Finger aufweist, die beispielsweise an einer zentralen Scheibe befestigt sein können. Die Scheibe mit den Fingern dreht sich um ihre Mittelachse.

Die Finger sind aber nicht exakt, sondern nur im wesentlichen radial orientiert, und im konkreten nachlaufend, also entgegen der Drehrichtung gekrümmt, um ein abweisendes Förderverhalten der Finger zu erreichen.

Weiterhin ist vorgeschlagen, als unter der oberen Transporteinrichtung angeordnete Förderscheibe einen an sich bekannten Förderscheibenzusammenbau zu verwenden, der aus einer oberen und einer unteren Förderscheibe besteht, die übereinander positioniert sind. Sie weisen in der Regel eine Drehrichtung und -zahl auf, die mit der des oberen Transportelements übereinstimmt.

Die obere Förderscheibe und/oder die untere Förderscheibe weisen vorzugsweise zum Aufnehmen und Festhalten eines Pflanzenstängels eingerichtete Aussparungen auf. Diese Förderscheiben können auch einen mit Zähnen ausgestatteten Außenumfang aufweisen. Die Pflanzenstängel finden dann zwischen zwei benachbarten Zähnen Platz und werden dort sicher festgehalten.

Auch am Grund - d. h. dem in radialer Richtung innersten Teil - einer Aussparung der unteren und/oder oberen Förderscheibe ist vorzugsweise ein Zahn vorgesehen, der im Zusammenwirken mit der benachbarten Wandung der Aussparung zum Festhalten eines Pflanzenstängels dient. In einer vorteilhaften Ausführungsform sind der Einzugseinrichtung Teilerspitzen mit rückwärtig angebrachten Führungselementen vorgeordnet, wie sie an sich von Maisgebissen her bekannt sind. Die Führungselemente drücken die Pflanzenstängel in den Grund der Aussparungen bzw. zwischen die Zähne, so dass sie dort eingeklemmt und sicher gehalten und transportiert werden. Außerdem kann eine Mitnehmerscheibe mit hakenförmigen Mitnehmern unterhalb der unteren Förderscheibe angeordnet sein, die die Pflanze aggressiv nach innen einziehen.

Weiterhin bietet sich an, unter der wenigstens einen Förderscheibe ein mit dieser koaxiales Messer vorzusehen, das mit größerer Drehzahl rotiert als die Förderscheibe und vor der Einzugseinrichtung stehende Pflanzen vom Erdboden trennt, so dass sie unschwer auch in seitlicher Richtung - beispielsweise zu einer Pflückeinrichtung - bewegt werden kann.

Ein weiterer Nachteil des Standes der Technik, DE 197 34 747, besteht in der großen Baulänge des dort vorgeschlagenen reihenunabhängig arbeitenden Pflückers. Um diesen Nachteil zu vermeiden wird vorgeschlagen, die Einzugseinrichtung nicht nur zum reihenunabhängigen Erfassen der Pflanzen zu verwenden, sondern sie auch für den Transport der Pflanzen durch die Pflückeinrichtung einzusetzen. Die Einzugseinrichtung sorgt also dafür, dass die Pflanzen über die wirksame Länge der Pflückeinrichtung transportiert werden. Die wirksame Länge ist der Teil der Länge der Pflückeinrichtung, in dem die Pflückeinrichtung die Pflanze bearbeitet, d. h. einzieht und die Nutzteile vom Resten der Pflanze trennt. Sie verläuft in der Regel quer zur Richtung, in der die Pflückeinrichtung die Pflanze einzieht. Die Einzugseinrichtung hält die Pflanze in der Zeit fest, in der sie von der Pflückeinrichtung bearbeitet wird. Im konkreten wird sie zumindest während eines wesentlichen Teils des Pflückvorganges von der Einzugseinrichtung festgehalten, und nicht nur während eines Einfädelvorganges, bei dem die Pflanze in den Wirkungsbereich der Pflückeinrichtung verbracht wird. Denkbar ist aber, dass die sich noch in der Pflückeinrichtung befindliche Pflanze gegen Ende des Pflückvorganges von der Einzugseinrichtung freigegeben wird, so dass letztere andere Pflanzen aufnehmen kann, was durch eine entsprechende Geometrie der Pflückeinrichtung und/oder durch ein Abschneiden der Pflanze erzielt werden kann.

Die Positionierung der Pflückeinrichtung relativ zur Einzugseinrichtung sollte vorzugsweise derart erfolgen, dass letztere die Pflanze während ihrer Bearbeitung in der Pflückeinrichtung unproblematisch festhalten und transportieren kann. Es wäre zwar denkbar, die Pflückeinrichtung bezüglich der Vorwärtsbewegungsrichtung hinter der Einzugseinrichtung anzubringen, was aber bei einem geraden Pflückkanal der Pflückeinrichtung entweder eine hinreichende Länge des Pflückkanals verbietet, oder die Übergabe der Pflanzen von der Einzugseinrichtung zur Pflückeinrichtung wegen der dann notwendig werdenden Richtungsänderung problematisch macht. Vorzugsweise ist daher die Pflückeinrichtung seitlich neben der Einzugseinrichtung angeordnet. Die Einzugseinrichtung erfasst die vor ihr stehenden Pflanzen und verbringt sie - durch ihre Rotation - seitlich neben sich. Dort können sie, ohne dass eine Richtungsänderung nötig wird, von der Pflückeinrichtung übernommen werden, die sich (zumindest im wesentlichen) parallel zur Vorwärtsbewegungsrichtung erstreckt. Vorzugsweise liegt der Eintritt der Pflückeinrichtung vor der Drehachse der Einzugseinrichtung, so dass für die Länge der Pflückeinrichtung - bezüglich der Vorwärtsbewegungsrichtung - vor und hinter der Drehachse der Einzugseinrichtung hinreichend Platz zur Verfügung steht.

Die Pflückeinrichtung kann in an sich bekannter Weise aus einem Pflückkanal aufgebaut sein, der in ein Abstreifblech eingebracht ist, und unter dem wenigstens eine Pflückwalze parallel zum Pflückkanal angeordnet ist. Findet nur eine einzige Pflückwalze Verwendung, kann sie mit einer Wand zusammenwirken. In der Regel finden aber zwei Pflückwalzen Verwendung, zwischen denen ein Spalt verbleibt, der parallel zum Pflückkanal verläuft und in den die Pflanze eingezogen wird.

Das Abstreifblech und die wenigstens eine Pflückwalze sind aus konstruktiven Gründen vorzugsweise unterhalb des oberen Transportelements und oberhalb der oberen Förderscheibe angeordnet.

Der Pflückkanal verläuft entweder parallel zur Vorwärtsbewegungsrichtung oder im Winkel dazu. Die letztgenannte Alternative hat den Vorteil, dass die Baulänge der Einzugs- und Pflückeinrichtung bei gegebener Länge des Pflückkanals reduziert ist.

Eine Pflückwalze, deren vorderer Bereich zum Erfassen einer Pflanze und zu ihrem Einziehen in den zwischen zwei Pflückwalzen gebildeten Spalt geeignet ist, erweist sich als besonders vorteilhaft. Der vordere Bereich ist vorzugsweise mit einem Schneckenförderer ausgestattet.

Oberhalb des Abstreifblechs kann eine Abdeckung vorgesehen sein, die in einem oberhalb des Pflückkanals liegenden Bereich einen Kanal definiert, durch den die Nutzteile der Pflanzen einem Förderer, insbesondere Schneckenförderer zugeführt werden. Die Abdeckung schützt außerdem das obere Einzugselement vor unbeabsichtigter Berührung.

Die erfindungsgemäße Einzugs- und Pflückeinrichtung ist zur Verwendung in Erntegutbergungsvorrichtungen vorgesehen. Eine derartige Erntegutbergungsvorrichtung, die auch als Maispflücker bezeichnet wird, dient zur Ernte von Gutarten, wie Mais und Sonnenblumen, deren Nutzteile von Pflanzenresten getrennt werden.

Naturgemäß erzeugt der erfindungsgemäße Pflücker zwei Gutströme, nämlich einen ersten Gutstrom, der die Nutzteile der Pflanzen enthält, und einen zweiten Gutstrom mit den Resten der Pflanzen. Der erste Gutstrom wird in der Regel gehäckselt oder ausgedroschen. Der zweite Gutstrom kann auf dem Feld verstreut oder in einem Schwad abgelegt werden. Bevorzugt ist aber, ihn zur Weiterverarbeitung mittels geeigneter Fördereinrichtungen auf einem Anhänger zu laden oder einer Erntemaschine zuzuführen.

Die Erfindung schlägt weiterhin eine Erntemaschine vor, die insbesondere mit einer Erntegutbergungseinrichtung mit einer beschriebenen Einzugs- und Pflückeinrichtung ausgestattet sein kann, aber auch mit beliebigen anderen Pflückern zusammenwirken kann. Der Erntemaschine werden in an sich bekannter Weise (DE 19528817 A) zwei Gutströme zugeführt, von denen ein erster die Nutzteile der Pflanze, und ein zweiter die Pflanzenreste enthält. Der zweite Gutstrom wird gehäckselt, und der erste Gutstrom einer Zertrümmerungseinrichtung zugeführt. Letztere ist vorzugsweise als Hammermühle ausgeführt. Der Vorzug besteht in einer besseren Zerkleinerung der Nutzteile gegenüber einem Häcksler, und einem geringeren Energieverbrauch im Vergleich mit Körnerprozessoren.

In den Zeichnungen ist ein nachfolgend näher beschriebenes Ausführungsbeispiel der Erfindung dargestellt. Es zeigt:
- Fig. 1: einen Längsschnitt durch eine Einzugs- und Pflückeinrichtung;
- Fig. 2: eine Draufsicht auf die Einzugs- und Pflückeinrichtung der Figur 1;
- Fig. 3: einen Schnitt durch die Einzugs- und Pflückeinrichtung entlang der Linie A-A der Figur 2;
- Fig. 4: einen Querschnitt durch einen Förderscheibenzusammenbau;
- Fig. 5: eine Draufsicht auf den Förderscheibenzusammenbau der Figur 4;
- Fig. 6: einen Längsschnitt durch einen selbstfahrenden Feldhäcksler mit einer Erntegutbergungsvorrichtung, die mit Einzugs- und Pflückeinrichtungen nach den vorhergehenden Figuren ausgestattet ist; und
- Fig. 7: eine Draufsicht auf den Feldhäcksler der Figur 6.

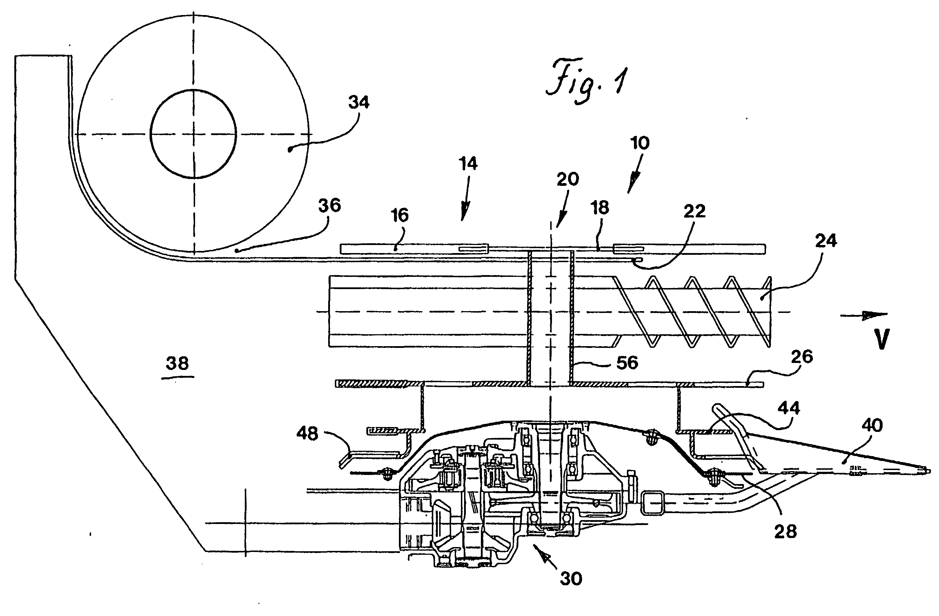

Die in Figur 1 im Längsschnitt dargestellte Einzugs- und Pflückeinrichtung 10 besteht in ihrem grundsätzlichen Aufbau aus einem oberen Transportelement 14, einem Förderscheibenzusammenbau mit einer oberen Förderscheibe 26 und einer unteren Förderscheibe 44, sowie einer Pflückeinrichtung mit einem Abstreifblech 22, einer ersten Pflückwalze 24 und einer zweiten Pflückwalze 52, sowie einem rotierenden Messer 28. Die Einzugs- und Pflückeinrichtung 10 ist eingerichtet, entlang der Vorwärtsbewegungsrichtung V vorangetrieben zu werden und auf einem Feld stehende Pflanzen vom Erdboden zu trennen, ihre Nutzteile mittels der Pflückeinrichtung von den Resten der Pflanze zu trennen, die Nutzteile mittels eines quer verlaufenden ersten Schneckenförderers 34 in ein Fahrzeug zur weiteren Verarbeitung abzutransportieren, sowie die Reste der Pflanzen durch einen weiteren Kanal 38 ebenfalls abzutransportieren.

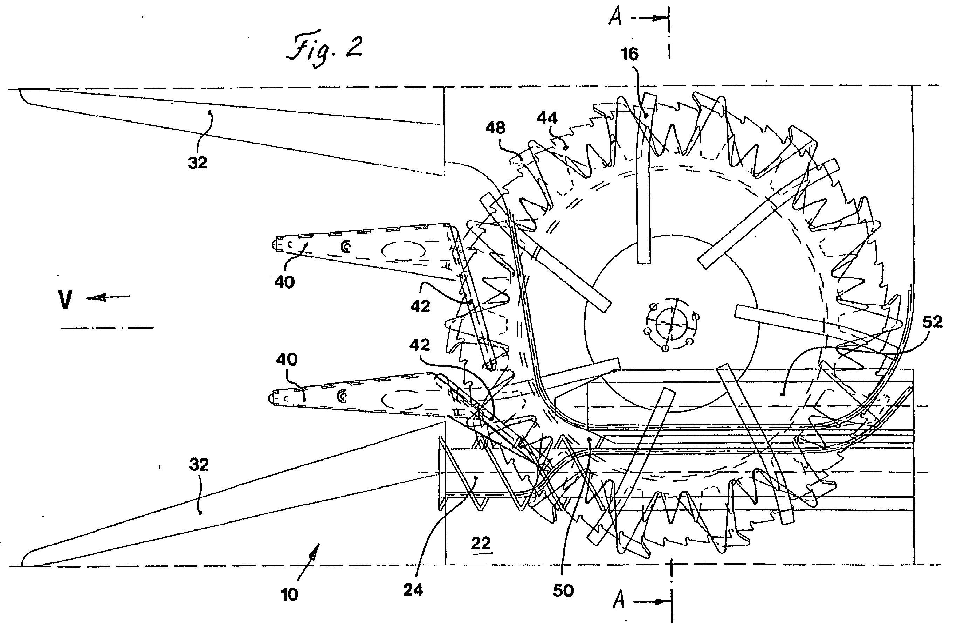

Zum Erfassen und Einziehen der Pflanze dient das obere Transportelement 14, das aus einer flachen Scheibe 18 mit an ihrem Außenumfang befestigten Fingern 16 besteht, die sich im wesentlichen radial nach außen erstrecken. Die Finger 16 sind jedoch in sich entgegen der Drehrichtung des oberen Transportelements 14, die in Figur 2 im Gegenuhrzeigersinn erfolgt, nach hinten gekrümmt, so dass ihre vorlaufende Fläche ein abweisendes Förderverhalten hat. Eventuell in den Wirkungsbereich der Finger 16 dringende Pflanzenteile, insbesondere Stängel, werden von der vorlaufenden Fläche der Finger 16 also nach außen gedrückt. Die nachlaufenden (Rück-) Flächen der Finger 16 wirken aufgrund ihrer Krümmung als aggressive Förderelemente, ziehen an ihr zur Anlage kommende Pflanzenteile also nach innen.

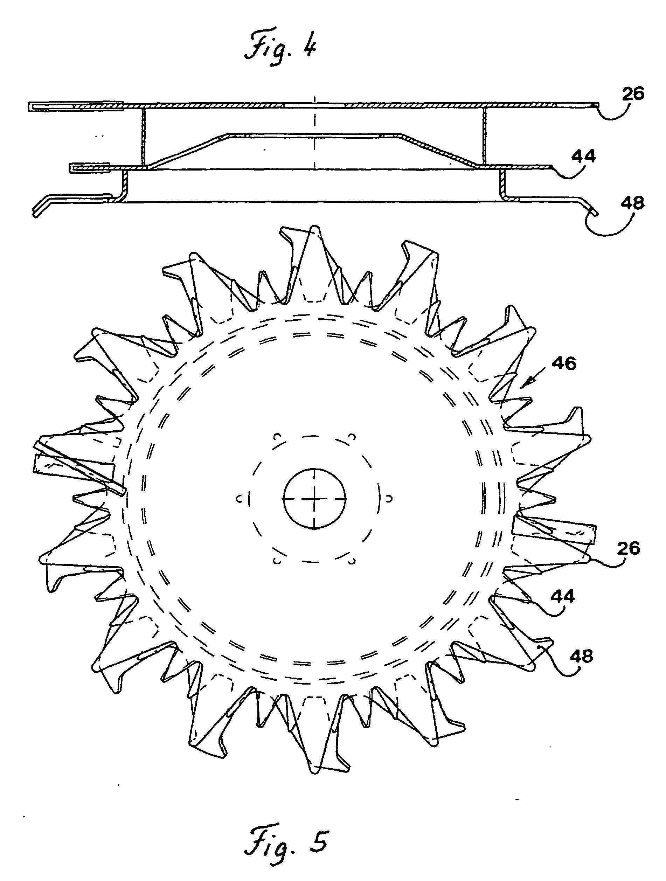

Koaxial zum oberen Transportelement 14 ist darunter ein Förderscheibenzusammenbau mit einer oberen Förderscheibe 26 und darunter einer unteren Förderscheibe 44, und wiederum darunter eine Mitnehmerscheibe 48 mit hakenförmig vorstehenden Mitnehmern angeordnet. Derartige Förderscheibenzusammenbauten sind an sich von Maisgebissen her bekannt. Die obere Förderscheibe 26 ist, wie man am besten aus der Figur 5 erkennt, an ihrem Außenumfang mit taschenartigen Aussparungen 46 versehen, die zur Aufnahme von Teilen, insbesondere Stängeln, von Pflanzen dienen. Die Aussparungen 46 sind im wesentlichen halbkreisförmig, und an der Grundfläche jeder Aussparung ist je ein Zahn angeordnet. Auch halbkreisförmige Aussparungen mit an der nachlaufenden Kante angeordneten vorstehenden Elementen, wie in der DE 197 34 747 A dargestellt, wären denkbar. Die untere Förderscheibe 44 weist einen gleichmäßig verzahnten Außenumfang mit Zähnen und dazwischen angeordneten Aussparungen auf, wobei jeder dritte Zahn deckungsgleich mit einem am Grund der Aussparung 46 der oberen Förderscheibe 26 angeordneten Zahn ist. Die unterste Scheibe, die sogenannte Mitnehmerscheibe 48, weist eine Anzahl über ihren Außenumfang verteilte, hakenförmige Mitnehmer auf, die in Drehrichtung vorlaufen und im Außenbereich nach unten abgewinkelt sind.

Die Mitnehmerscheibe 48, die untere Förderscheibe 44 und die obere Förderscheibe 26 sind durch eine Hohlwelle 56 mit der Scheibe 18 des oberen Transportelements 14 verbunden und daher zu einer Drehung im gleichen Drehsinn und mit gleicher Drehzahl wie das obere Transportelement 14 eingerichtet, also bezüglich der Figur 2 im Gegenuhrzeigersinn um die vertikal verlaufende Achse 20. Es wäre auch denkbar, die Achse 20 leicht in Vorwärtsbewegungsrichtung V nach vorn zu neigen. Es sind doppelt so viele Aussparungen 46 wie Finger 16 vorhanden, obwohl ihre Anzahl auch übereinstimmen könnte. Die Finger 16 und die Aussparungen 46 in der oberen Förderscheibe 26 bilden eine Art Zwickel, in dem ein Stängel einer Pflanze aufgenommen und transportiert werden kann.

Zum Antrieb des oberen Transportelements 14, der unteren Förderscheibe 44 und oberen Förderscheibe 26 dient ein Getriebe 30, das über nicht dargestellte Elemente von einer selbstfahrenden Erntemaschine angetrieben wird. Das Getriebe 30 versetzt auch ein unterhalb der unteren Mitnehmerscheibe 48 um die Achse 20 rotierendes Messer 28 in Drehung, das mit einer größeren Drehzahl als das Transportelement 14 und die Förderscheiben 26, 44 rotiert.

Dem Transportelement 14 und dem Förderscheibenzusammenbau ist bezüglich der Vorwärtsbewegungsrichtung V der Einzugs- und Pflückeinrichtung 10 links und rechts je ein Stängelteiler 32 vorgeordnet, die ggf. seitlich des Wirkungsbereichs der Einzugs- und Pflückvorrichtung 10 stehende Pflanzen in Richtung auf ihre Mittelachse zu verbiegen, so dass die Pflanzen unproblematisch erfassbar sind. Außerdem sind dem Transportelement 14 und dem Förderscheibenzusammenbau zwei Teilerspitzen 40 vorgelagert, die die Pflanzen seitlich ablenken. An den Rückseiten der Teilerspitzen 40 sind Führungselemente 42 angeordnet, die von den Teilerspitzen 40 in Drehrichtung des Förderscheibenzusammenbaus verlaufen und gegenüber einer Tangente zum Förderscheibenzusammenbau in Richtung auf die Drehachse 20 zu abgewinkelt sind. Die Führungselemente 42 sind gerade und im wesentlichen kreiszylindrisch. Sie erstrecken sich bis etwa zur nachfolgenden Teilerspitze 40 bzw. zum Eingang des Pflückkanals 50. Die Teilerspitzen 40 und die Stängelteiler 32 definieren in den zwischen ihnen verbleibenden Zwischenräumen Einzugs- und Schnittstellen, in denen die Pflanzen durch das Transportelement 14 und den Förderscheibenzusammenbau erfasst werden können, wobei das Messer 28 die Pflanzen von den auf dem Erdboden verbleibenden Stoppeln abschneidet.

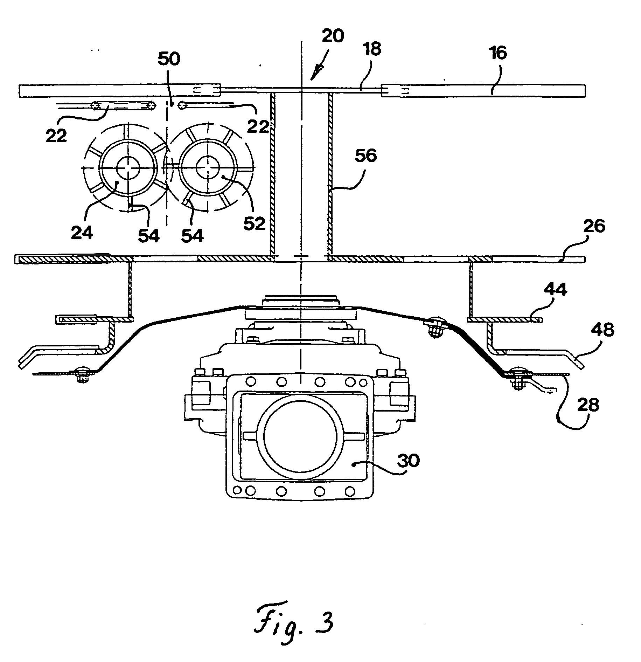

Die erfassten Pflanzen werden durch das Transportelement 14 und die Förderscheiben 26, 44 und die Mitnehmerscheibe 48 bezüglich der Figur 2 entgegen dem Uhrzeigersinn gefördert und zur Pflückeinrichtung in einen Pflückkanal 50 verbracht, der in ein Abstreifblech 22 eingebracht ist. Der Pflückkanal 50 verläuft über den größten Teil seiner Länge parallel zur Vorwärtsbewegungsrichtung V und ist in seinem Endbereich in Richtung auf die Achse 20 zu gekrümmt. Das horizontale Abstreifblech 22 ist in vertikaler Richtung zwischen dem oberen Transportelement 14 und der oberen Förderscheibe 26 angeordnet. Unterhalb des Abstreifblechs 22 und oberhalb der oberen Förderscheibe 26 sind eine erste Pflückwalze 24 und eine zweite Pflückwalze 52 positioniert. Zwischen der ersten Pflückwalze 24 und der zweiten Pflückwalze 52 ist ein Spalt definiert, der parallel zum Pflückkanal 50 unter letzterem verläuft. Die Längsachsen der ersten 24 und zweiten Pflückwalze 52 verlaufen daher horizontal und parallel zur Vorwärtsbewegungsrichtung V. Die zweite Pflückwalze 52, die zwischen der Achse 20 und der ersten Pflückwalze 24 angeordnet ist, hat eine vordere Spitze, die sich bezüglich der Vorwärtsbewegungsrichtung V vor der Achse 20 befindet. Die erste Pflückwalze 24 ist länger als die zweite Pflückwalze 52, ist in ihrem vorderen Bereich jedoch als Schneckenförderer ausgebildet. Etwa ab der Höhe der Spitze der zweiten Pflückwalze 52 ist die erste Pflückwalze 24, wie (im wesentlichen die gesamte) zweite Pflückwalze 52 mit radial verlaufenden, sich über die Länge der Pflückwalzen 24, 52 erstreckenden Mitnehmern 54 versehen, die in Figur 3 am besten erkennbar sind.

Die Wirkungsweise ist folgendermaßen: In Vorwärtsbewegungsrichtung V vor der Einzugs- und Pflückeinrichtung 10 stehende Pflanzen werden ggf. durch die Stängelteiler 32 und/oder die Teilerspitzen 40 seitlich abgelenkt, und treffen in den dazwischen definierten Einzugs- und Schnittstellen auf das obere Transportelement 14 und die obere Förderscheibe 26 und die untere Förderscheibe 44 sowie die Mitnehmerscheibe 48. Die Pflanzen werden durch das Messer 28 abgemäht.

Die Pflanzen, die an der vorlaufenden Oberfläche der Finger 16 des oberen Transportelements 14 zum Anliegen kommen, werden wegen des abweisenden Förderverhaltens der Finger 16 nach außen gefördert, und kommen an der nachlaufenden Oberfläche desselben oder eines nachfolgenden Fingers 16 zum Anliegen.

Die Pflanzen werden also ggf. in einer leicht geneigten Stellung, aber im wesentlichen vertikal orientiert weitertransportiert. Durch die Führungselemente 42 werden bei der Drehung des Förderscheibenzusammenbaus die von der oberen Förderscheibe 26 erfaßten Stängel der Pflanzen in den Grund der Aussparungen 46 der oberen Förderscheibe 26 gedrückt, so dass sie durch die Zähne der oberen Förderscheibe 26 und der unteren Förderscheibe 44 festgeklemmt werden und ein sicheres Mitnehmen der Pflanzen gewährleistet ist. Die unteren Enden der Pflanzen gleiten, falls sie von den Mitnehmern der Mitnehmerscheibe 48 erfaßt werden, an den in Drehrichtung vorlaufenden Flächen der Mitnehmer radial nach innen. Die Pflanzen werden im Ergebnis durch die Scheiben des Förderscheibenzusammenbaus und die Finger 16 des oberen Transportelements 14 abgestützt und gehalten.

Sobald die Stängel der Pflanzen in Kontakt mit dem vorderen Rand des Abstreifblechs 22 gelangen, werden sie durch dessen sich trichterförmig verengende Ausformung in den Pflückspalt 50 eingeführt. Am Anfang des Pflückspalts 50 wirkt der Schneckenförderer der ersten Pflückwalze 24 auf die Pflanze ein und bewirkt, dass die Pflanze in den Spalt zwischen der ersten 24 und zweiten Pflückwalze 52 eingezogen wird. Dabei verbiegt der noch in der Aussparung 46 gehaltene untere Teil der Pflanze, da die vom Grund der Aussparung 46 beschriebene Kreisbahn außerhalb des Pflückspalts 50 verläuft. Die sich gegensinnig drehenden Pflückwalzen 24, 52 ziehen die Pflanze zwischen sich nach unten ein und wirken als Ausräumer auf den Förderscheibenzusammenbau, wobei der angespitzte vordere Bereich der zweiten Pflückwalze 52 unterstützend wirkt. Gleichzeitig transportieren die Finger 16 des oberen Transportelements 14 die Pflanze über die Länge des Pflückkanals 50 entgegen der Vorwärtsbewegungsrichtung V nach hinten, wobei ein nachfolgender Finger 16 die ggf. zuvor an der nachlaufenden Oberfläche eines vorlaufenden Fingers 16 anliegende Pflanze transportiert. Die Länge der Finger 16 des oberen Transportelements 14 ist daher derart dimensioniert, dass die Finger 16 lang genug sind, an der Einzugs- und Schnittstelle die Pflanzen zu erfassen, und dass der zwischen jeweils zwei Fingern 16 verbleibende Zwischenraum den gesamten Pflückkanal überstreicht. Nutzteile der Pflanzen, wie Kolben, Fruchtstände von Sonnenblumen oder andere Früchte werden vom Abstreifblech 22 festgehalten, und somit von den Resten der Pflanze getrennt. Die Nutzteile werden durch die Finger 16 und nachfolgende Nützteile in eine Mulde 36 geschoben. Dort gelangen sie in den Wirkungsbereich eines ersten Schneckenförderers 34, der sie in seitlicher Richtung zu einer Erntemaschine odgl. verbringt.

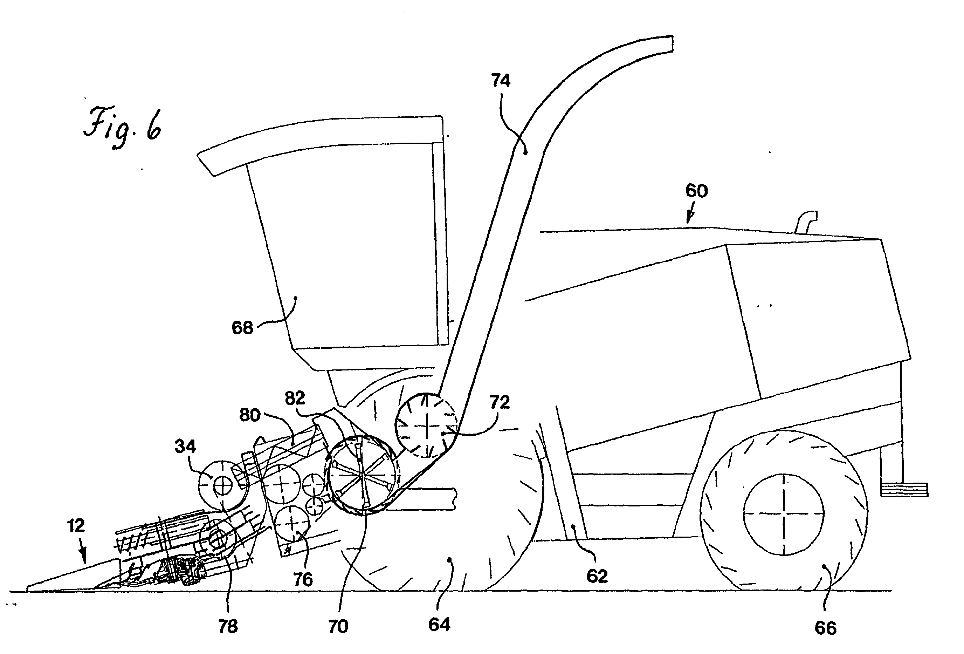

Gleichzeitig werden die Reste der Pflanzen von den Pflückwalzen 24, 52 in einen Kanal 38 unterhalb des ersten Schneckenförderers 34 verbracht, in dem ein weiterer, in Figur 6 dargestellter zweiter Schneckenförderer 78 oder ein beliebiger anderer Förderer, wie ein Förderband, die Pflanzen zu einer Erntemaschine verbringt. Denkbar wäre auch, die Pflanzen mittels geeigneter Schneidelemente der Pflückwalzen 24, 42 oder einen separaten Häcksler zu zerteilen und/oder sie direkt auf dem Feld abzulegen, ohne sie einem Förderer aufzugeben.

Die in Figur 6 gezeigte Erntemaschine 60 in der Art eines selbstfahrenden Feldhäckslers baut sich auf einem Rahmen 62 auf, der von vorderen und rückwärtigen Rädern 64 und 66 getragen wird. Die Bedienung der Erntemaschine 60 erfolgt von einer Fahrerkabine 68 aus, von der aus eine Erntegutbergungsvorrichtung 12 einsehbar ist.

Die Erntegutbergungsvorrichtung 12, die mit insgesamt sechs nebeneinander angeordneten Einzugs- und Pflückeinrichtungen 10 ausgestattet ist, führt der Erntemaschine 60 zwei unterschiedliche Gutströme zu. Die Reste der Pflanzen werden durch eine zweite Förderschnecke 78, die in dem Kanal 38 (s. Figur 1) angeordnet ist, zur Mitte der Erntegutbergungsvorrichtung 12 verbracht. Dort werden sie durch zwei Paare von Einzugswalzen 76 einer konventionellen Häckseltrommel 70 zugeführt, die sie in kleine Stücke häckselt und einer Fördervorrichtung 72 aufgibt. Die gehäckselten Pflanzenreste verlassen die Erntemaschine 60 zu einem nebenher fahrenden Anhänger über einen drehbaren Austragsschacht 74.

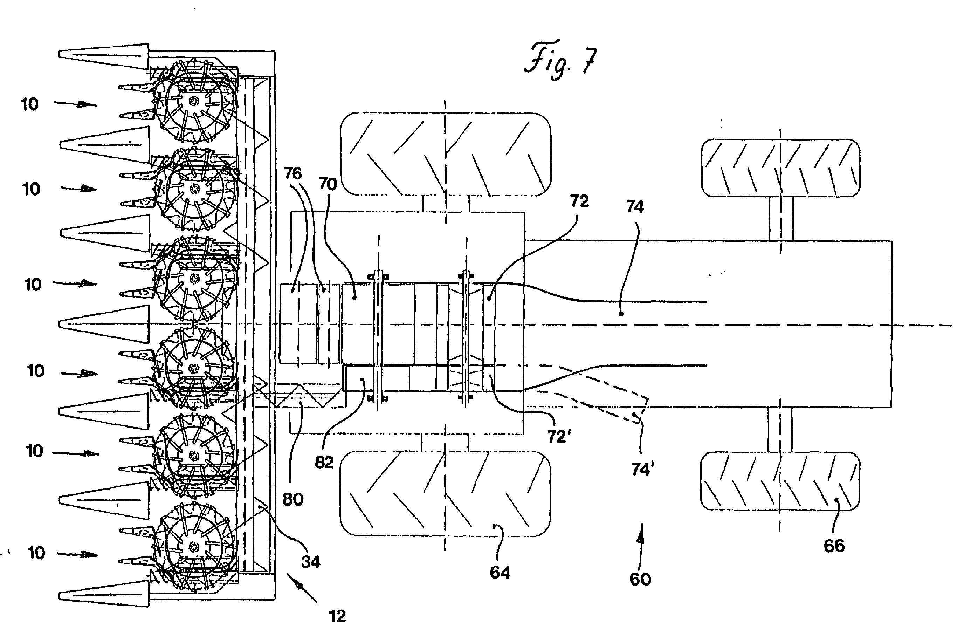

Die mittels der Pflückeinrichtungen von den Resten der Pflanzen getrennten Nutzteile werden, wie insbesondere anhand der in Figur 7 dargestellten schematischen Draufsicht erkennbar ist, mittels der ersten Förderschnecke 34 und einer quer dazu verlaufenden dritten Förderschnecke 80 in einem anderen Gutstrom einer Zerkleinerungsvorrichtung in Form einer Hammermühle 82 zugeführt, die neben und koaxial zu der Häckseltrommel 70 angeordnet ist. Die Hammermühle 82 besteht aus um eine horizontale Achse rotierenden Armen mit an deren Enden pendelnd angebrachten Hämmern, die die Körner von den Maiskolben trennen und im Zusammenwirken mit einem an einer Gehäusewand der Zerkleinerungsvorrichtung vorgesehenen - in der Zeichnung nicht erkennbaren - Reibboden zertrümmern. Durch die Hammermühle erübrigt sich ein im Stand der Technik zum Aufschließen der Körner verwendeter Körnerprozessor. Der Energiebedarf der Erntemaschine ist wesentlich reduziert, da der Leistungsbedarf der Hammermühle kleiner als der eines Körnerprozessors ist. Die zerkleinerten Nutzteile der Pflanzen werden durch eine Fördervorrichtung 72', die neben und koaxial zu der Fördervorrichtung 72 angeordnet ist, einem Austragsschacht 74' zugeführt. Der Austragsschacht 74' kann, wie der Austragsschacht 74, separat drehbar gestaltet sein, um das Gut einem anderen nebenher fahrenden Anhänger oder einem anderen, abgetrennten Behältnis desselben Anhängers zuzuführen. Denkbar ist auch, die Gutströme der Pflanzenreste und der Nutzteile der Pflanzen stromab der Häckseltrommel 70 bzw. Hammermühle wieder zu vereinen, um. z. B. Ganzpflanzensilage herzustellen.

Anhand der Figur 7 ist erkennbar, dass die Einzugs- und Pflückeinrichtungen 10 beidseits der Längsmittelachse der Erntemaschine 60 zueinander symmetrisch gestaltet sind; die oberen Transportelemente 14 und die Förderscheibenzusammenbauten der in Figur 7 oben eingezeichneten drei rechten Einzugs- und Pflückvorrichtungen 10 drehen sich im Uhrzeigersinn, die anderen drei Einzugs- und Pflückvorrichtungen 10 gegensinnig.

## Patentansprüche

1. Einzugs- und Pflückeinrichtung (10) mit einer rotierenden Einzugseinrichtung und einer Pflückeinrichtung, wobei die Einzugseinrichtung zum Erfassen von Teilen, insbesondere Stängeln, von Pflanzen eingerichtet ist, und betreibbar ist, die Pflanzen der Pflückeinrichtung zuzuführen, die Teile von ihnen abtrennt, und die Einzugseinrichtung wenigstens eine drehbare Förderscheibe (26, 44) und ein darüber angeordnetes, drehbares oberes Transportelement (14) aufweist, **dadurch gekennzeichnet, dass** das obere Transportelement (14) eine vorlaufende Oberfläche aufweist, die in sich entgegen der Drehrichtung des oberen Transportelements (14) nach hinten gekrümmt ist, so dass sie ein abweisendes Förderverhalten hat.

2. Einzugs- und Pflückeinrichtung (10) nach Anspruch 1, **dadurch gekennzeichnet, dass** das obere Transportelement (14) eine nachlaufende Oberfläche aufweist, die in sich entgegen der Drehrichtung des oberen Transportelements (14) nach hinten gekrümmt ist und daher ein aggressives Förderverhalten aufweist.

3. Einzugs- und Pflückeinrichtung (10) nach Anspruch 1 oder 2, **dadurch gekennzeichnet, dass** das obere Transportelement (14) eine Anzahl im wesentlichen radial nach außen stehender Finger (16) aufweist.

4. Einzugs- und Pflückeinrichtung (10) nach Anspruch 3, **dadurch gekennzeichnet, dass** die Finger (16) bezüglich der Drehrichtung des oberen Transportelements (14) nachlaufend gekrümmt sind.

5. Einzugs- und Pflückeinrichtung (10) nach einem der vorhergehenden Ansprüche, **dadurch gekennzeichnet, dass** eine untere Förderscheibe (44) und eine obere Förderscheibe (26) unterhalb des oberen Transportelements (14) übereinander angeordnet sind.

6. Einzugs- und Pflückeinrichtung (10) nach Anspruch 5, **dadurch gekennzeichnet, dass** das obere Transportelement (14) die gleiche Drehrichtung und Drehzahl wie die obere Förderscheibe (26) und/oder untere Förderscheibe (44) aufweist.

7. Einzugs- und Pflückeinrichtung (10) nach Anspruch 5 oder 6, **dadurch gekennzeichnet, dass** die obere Förderscheibe (26) und/oder die untere Förderscheibe (44) mit Aussparungen (46) versehen sind, die zum Aufnehmen und Festhalten eines Stängels einer Pflanze eingerichtet sind.

8. Einzugs- und Pflückeinrichtung (10) nach einem der Ansprüche 5 bis 7, **dadurch gekennzeichnet, dass** der Außenumfang der oberen Förderscheibe (26) und/oder unteren Förderscheibe (44) mit Zähnen versehen ist.

9. Einzugs- und Pflückeinrichtung (10) nach Anspruch 7 oder 8, **dadurch gekennzeichnet, dass** am Grund der Aussparung (46) der oberen Förderscheibe (26) und/oder der unteren Förderscheibe wenigstens je ein Zahn angebracht ist.

10. Einzugs- und Pflückeinrichtung (10) nach einem der vorhergehenden Ansprüche, **dadurch gekennzeichnet, dass** die wenigstens eine Förderscheibe (26, 44) koaxial mit einem darunter angeordneten drehbaren Messer (28) angeordnet ist, das vorzugsweise mit einer größeren Drehzahl als die Förderscheibe (26,44) rotiert.

11. Einzugs- und Pflückeinrichtung (10) nach einem der vorhergehenden Ansprüche, **dadurch gekennzeichnet, dass** das obere Transportelement (14) und/oder die Förderscheibe (26, 44) eingerichtet ist, erfasste Pflanzen über die Länge der Pflückeinrichtung zu transportieren.

12. Einzugs- und Pflückeinrichtung (10) nach einem der vorhergehenden Ansprüche, **dadurch gekennzeichnet, dass** die Pflückeinrichtung bezüglich der Vorwärtsbewegungsrichtung (V) seitlich neben der Einzugseinrichtung angeordnet ist.

13. Einzugs- und Pflückeinrichtung (10) nach einem der vorhergehenden Ansprüche, **dadurch gekennzeichnet, dass** der Eintritt der Pflückeinrichtung bezüglich der Vorwärtsbewegungsrichtung (V) vor der Drehachse (20) der Einzugseinrichtung angeordnet ist.

14. Einzugs- und Pflückeinrichtung (10) nach einem der vorhergehenden Ansprüche, **dadurch gekennzeichnet, dass** die Pflückeinrichtung einen Pflückkanal (50) in einem Abstreifblech (22) aufweist, und wenigstens eine darunter angeordnete, zum Pflückkanal (50) parallel orientierte Pflückwalze (24, 52).

15. Einzugs- und Pflückeinrichtung nach Anspruch 14, **dadurch gekennzeichnet, dass** das Abstreifblech (22) und die wenigstens eine Pflückwalze (24,52) unterhalb des oberen Transportelements (14) und oberhalb der oberen Förderscheibe (26) angeordnet ist.

16. Einzugs- und Pflückeinrichtung nach Anspruch 14 oder 15, **dadurch gekennzeichnet, dass** der Pflückkanal (50) parallel zur Vorwärtsbewegungsrichtung (V) verläuft.

17. Einzugs- und Pflückeinrichtung nach einem der Ansprüche 14 bis 16, **dadurch gekennzeichnet, dass** eine Pflückwalze (24) in ihrem vorderen Bereich zum Erfassen einer Pflanze eingerichtet, insbesondere mit einem Schneckenförderer ausgestattet ist.

18. Erntegutbergungsvorrichtung (12) mit einer Einzugs- und Pflückeinrichtung nach einem der vorhergehenden Ansprüche.

19. Erntegutbergungsvorrichtung (12) nach Anspruch 18, **gekennzeichnet durch** Einrichtungen, insbesondere einen Schneckenförderer (78), zum Transport der Pflanzenreste zu einer Erntemaschine (60) oder einem Anhänger.

20. Erntemaschine (60), insbesondere selbstfahrende Erntemaschine (60) mit einer Erntegutbergungsvorrichtung nach einem der vorhergehenden Ansprüche 18 oder 19.

21. Erntemaschine (60), insbesondere nach Anspruch 20, mit einer Erntegutbergungseinrichtung (12), die mit mindestens einer Einzugs- und Pflückeinrichtung (10) versehen ist, welche eingerichtet ist, Pflanzen vom Boden abzutrennen und Nutzteile von Resten der Pflanzen zu trennen, wobei die Erntegutbergungseinrichtung (12) eingerichtet ist, die Nutzteile der Pflanzen und die Reste der Pflanzen voneinander getrennt der Erntemaschine (60) zuzuführen, **dadurch gekennzeichnet, dass** die Nutzteile der Pflanze in der Erntemaschine einer Zertrümmerungseinrichtung, insbesondere einer Hammermühle, zugeführt werden.

## Claims

1. Feeding and picking device (10) having a rotating feeding device and a picking device, the feeding device being arranged to grasp parts of plants, especially stalks, and being able to be operated to feed the plants to the picking device which separates parts of them, and the feeding device having at least one rotatable conveyor disc (26, 44) and a rotatable upper transport element (14) arranged above same, **characterised in that** the upper transport element (14) has a leading surface which is curved backwards against the direction of rotation of the upper transport element (14) such that it has a rejecting transporting action.

2. Feeding and picking device (10) according to claim 1, **characterised in that** the upper transport element (14) has a trailing surface which is curved backwards against the direction of rotation of the upper transport element (14) and therefore has an aggressive transporting action.

3. Feeding and picking device (10) according to claim 1 or 2, **characterised in that** the upper transport element (14) has a number of fingers (16) which protrude substantially radially towards the outside.

4. Feeding and picking device (10) according to claim 3, **characterised in that** the fingers (16) are curved in the trailing direction with respect to the direction of rotation of the upper transport element (14).

5. Feeding and picking device (10) according to one of the preceding claims, **characterised in that** a lower conveyor disc (44) and an upper conveyor disc (26) are arranged the one above the other below the upper transport element (14).

6. Feeding and picking device (10) according to claim 5, **characterised in that** the upper transport element (14) rotates in the same direction and at the same speed as the upper conveyor disc (26) and/or the lower conveyor disc (44).

7. Feeding and picking device (10) according to claim 5 or 6, **characterised in that** the upper conveyor disc (26) and/or the lower conveyor disc (44) are/is provided with recesses (46) which are arranged for grasping and retaining the stalk of a plant.

8. Feeding and picking device (10) according to one of claims 5 to 7, **characterised in that** the outer circumference of the upper conveyor disc (26) and/or lower conveyor disc (44) is provided with teeth.

9. Feeding and picking device (10) according to claim 7 or 8, **characterised in that** at least one tooth each is attached to the base of the recess (46) of the upper conveyor disc (26) and/or the lower conveyor disc.

10. Feeding and picking device (10) according to one of the preceding claims, **characterised in that** the at least one conveyor disc (26, 44) is arranged so as to be coaxial with a rotating knife (28) arranged below it, which preferably rotates at a faster speed than the conveyor disc (26, 44).

11. Feeding and picking device (10) according to one of the preceding claims, **characterised in that** the upper transport element (14) and/or the conveyor disc (26, 44) are/is arranged to convey grasped plants over the length of the picking device.

12. Feeding and picking device (10) according to one of the preceding claims, **characterised in that** the plucking device is arranged to the side of the feeding device with respect to the forward direction of movement (V).

13. Feeding and picking device (10) according to one of the preceding claims, **characterised in that** the entrance of the picking device is arranged in front of the rotational axis (20) of the feeding device with respect to the forward direction of movement (V).

14. Feeding and picking device (10) according to one of the preceding claims, **characterised in that** the picking device has a picking channel (50) in a stripper vane (22) and at least one picking roller (24, 52) arranged below said vane and oriented parallel to the picking channel (50).

15. Feeding and picking device according to claim 14, **characterised in that** the stripper vane (22) and the at least one picking roller (24, 52) are arranged below the upper transport element (14) and above the upper conveyor disc (26).

16. Feeding and picking device according to claim 14 or 15, **characterised in that** the picking channel (50) extends parallel to the forward direction of movement (V).

17. Feeding and picking device according to one of claims 14 to 16, **characterised in that** a picking roller (24) is arranged in its front region for grasping a plant, especially is equipped with a screw conveyor.

18. Crop harvesting apparatus (12) having a feeding and picking device according to one of the preceding claims.

19. Crop harvesting apparatus (12) according to claim 18, **characterised by** devices, especially a screw conveyor (78), for conveying the plant remains to a harvester (60) or a trailer.

20. Harvester (60), especially a self-propelled harvester (60) having a crop harvesting apparatus according to one of the preceding claims 18 or 19.

21. Harvester (60), especially according to claim 20, having a crop harvesting apparatus (12) which is provided with at least one feeding and picking device (10) which is designed to cut plants from the ground and separate useful parts from the remains of the plants, the crop harvesting apparatus (12) being designed to feed the useful parts of the plants and the remains of the plants separately to the harvester (60), **characterised in that** the useful parts of the plant are fed in the harvester to a fragmenting device, especially a hammer mill.

## Revendications

1. Dispositif d'introduction et de cueillage (10) avec un dispositif d'introduction rotatif et un dispositif de cueillage, le dispositif d'introduction étant conçu pour la prise de parties, en particulier de tiges, de plantes et pouvant fonctionner pour amener les plantes au dispositif de cueillage, séparant les parties de celles-ci, et le dispositif d'introduction comportant au moins un disque transporteur rotatif (26, 44) et un élément de transport supérieur rotatif (14) disposé au-dessus de celui-ci, **caractérisé en ce que** l'élément de transport supérieur (14) comporte une surface d'amorce qui est recourbée vers l'arrière à l'inverse du sens de rotation de l'élément de transport supérieur (14) de sorte qu'elle a une fonction de transport de renvoi.

2. Dispositif d'introduction et de cueillage (10) selon la revendication 1, **caractérisé en ce que** l'élément de transport supérieur (14) comporte une surface de traîne qui est recourbée vers l'arrière à l'inverse du sens de rotation de l'élément de transport supérieur (14) et qui a donc une fonction de transport agressive.

3. Dispositif d'introduction et de cueillage (10) selon la revendication 1 ou 2, **caractérisé en ce que** l'élément de transport supérieur (14) comporte un certain nombre de doigts (16) disposés sensiblement radialement vers l'extérieur.

4. Dispositif d'introduction et de cueillage (10) selon la revendication 3, **caractérisé en ce que** les doigts (16) sont recourbés par rapport au sens de rotation de l'élément de transport supérieur (14).

5. Dispositif d'introduction et de cueillage (10) selon l'une quelconque des revendications précédentes, **caractérisé en ce qu'**un disque transporteur inférieur (44) et un disque transporteur supérieur (26) sont disposés l'un sur l'autre en dessous de l'élément de transport supérieur (14).

6. Dispositif d'introduction et de cueillage (10) selon la revendication 5, **caractérisé en ce que** l'élément de transport supérieur (14) présente le même sens de rotation et la même vitesse de rotation que le disque transporteur supérieur (26) et/ou que le disque transporteur inférieur (44).

7. Dispositif d'introduction et de cueillage (10) selon la revendication 5 ou 6, **caractérisé en ce que** le disque transporteur supérieur (26) et/ou le disque transporteur inférieur (44) sont munis d'encoches (46) qui sont conçues pour la prise et le maintien d'une tige d'une plante.

8. Dispositif d'introduction et de cueillage (10) selon l'une quelconque des revendications 5 à 7, **caractérisé en ce que** le pourtour extérieur du disque transporteur supérieur (26) et/ou du disque transporteur inférieur (44) est muni de dents.

9. Dispositif d'introduction et de cueillage (10) selon la revendication 7 ou 8, **caractérisé en ce qu'**au moins une dent est placée dans le fond de l'encoche (46) du disque transporteur supérieur (26) et/ou du disque transporteur inférieur.

10. Dispositif d'introduction et de cueillage (10) selon l'une quelconque des revendications précédentes, **caractérisé en ce qu'**au moins un disque transporteur (26, 44) est disposé coaxialement par rapport à une lame (28) rotative montée en dessous de celui-ci, qui tourne, de préférence, à une vitesse de rotation plus élevée que le disque transporteur (26, 44).

11. Dispositif d'introduction et de cueillage (10) selon l'une quelconque des revendications précédentes, **caractérisé en ce que** l'élément de transport supérieur (14) et/ou le disque transporteur (26, 44) est conçu pour transporter les plantes prises sur la longueur du dispositif de cueillage.

12. Dispositif d'introduction et de cueillage (10) selon l'une quelconque des revendications précédentes, **caractérisé en ce que** le dispositif de cueillage est placé latéralement à côté du dispositif d'introduction par rapport au sens de déplacement vers l'avant (V).

13. Dispositif d'introduction et de cueillage (10) selon l'une quelconque des revendications précédentes, **caractérisé en ce que** l'entrée du dispositif de cueillage est placée devant l'axe de rotation (20) du dispositif d'introduction par rapport au sens de déplacement vers l'avant (V).

14. Dispositif d'introduction et de cueillage (10) selon l'une quelconque des revendications précédentes, **caractérisé en ce que** le dispositif de cueillage comporte un canal de cueillage (50) dans une tôle racleuse (22) et au moins un rouleau de cueillage (24, 52) disposé en dessous de celle-ci, orienté parallèlement au canal de cueillage (50).

15. Dispositif d'introduction et de cueillage (10) selon la revendication 14, **caractérisé en ce que** la tôle racleuse (22) et le au moins un rouleau de cueillage (24, 52) sont disposés en dessous de l'élément de transport supérieur (14) et au dessus du disque transporteur supérieur (26).

16. Dispositif d'introduction et de cueillage (10) selon la revendication 14 ou 15, **caractérisé en ce que** le canal de cueillage (50) s'étend parallèlement au sens de déplacement vers l'avant (V).

17. Dispositif d'introduction et de cueillage (10) selon l'une quelconque des revendications 14 à 16, **caractérisé en ce que** la zone avant d'un rouleau de cueillage (24) est conçue pour la prise d'une plante, en particulier **en ce que** le rouleau est équipé d'une vis transporteuse.

18. Dispositif de récupération de produits de récolte (12) avec un dispositif d'introduction et de cueillage selon l'une quelconque des revendications précédentes.

19. Dispositif de récupération de produits de récolte (12) selon la revendication 18, **caractérisé par** des équipements, en particulier une vis transporteuse (78) pour le transport des restes de plantes vers une machine de récolte (60) ou une remorque.

20. Machine de récolte (60), en particulier machine de récolte automotrice (60) avec un dispositif de récupération de produits de récolte selon l'une quelconque des revendications précédentes 18 ou 19.

21. Machine de récolte (60), en particulier selon la revendication 20, avec un dispositif de récupération de produits de récolte (12) qui est équipée d'au moins un dispositif d'introduction et de cueillage (10), qui est conçu pour détacher les plantes du sol et pour séparer les parties utiles des restes des plantes, le dispositif de récupération de produits récoltés (12) étant conçu pour amener les parties utiles des plantes et les restes des plantes séparés les uns des autres à la machine de récolte (60), **caractérisée en ce que** les parties utiles des plantes sont amenées à un dispositif d'écrasement, en particulier un broyeur à marteaux, dans la machine de récolte.
